# EUROPÄISCHE PATENTSCHRIFT

(11) **EP 2 635 811 B1**
(45) Veröffentlichungstag und Bekanntmachung des Hinweises auf die Patenterteilung: **14.12.2016**
(21) Anmeldenummer: 11767008.3
(22) Anmeldetag: 10.10.2011
(51) Int. Cl.: F04B 1/04, F04B 53/00, F04B 53/16, F04B 53/22, F02M 59/02, F02M 59/06, F16J 15/32

(54) **KRAFTSTOFF-FÖRDEREINRICHTUNG FÜR EINE BRENNKRAFTMASCHINE**
FUEL PUMPING APPARATUS FOR A COMBUSTION ENGINE
APPAREIL DE POMPAGE DE CARBURANT POUR UN MOTEUR À COMBUSTION

(30) Priorität: 04.11.2010 DE 102010043365
(43) Veröffentlichungstag der Anmeldung: 11.09.2013
(73) Patentinhaber: Robert Bosch GmbH, 70442 Stuttgart (DE)
(72) Erfinder: LUCARELLI, Francesco, 70469 Stuttgart (DE); KOENIG, Thomas, 71254 Ditzingen (DE)
(86) Internationale Anmeldenummer: PCT/EP2011/067617
(87) Internationale Veröffentlichungsnummer: WO 2012/059298

(56) Entgegenhaltungen:
- EP-A1- 0 790 403
- EP-B1- 0 991 863
- DE-A1- 4 419 927
- US-A- 3 179 422
- US-A- 3 879 042

## Beschreibung

### Stand der Technik

Die Erfindung geht aus von einem Kraftstoff-Fördereinrichtung für eine Brennkraftmaschine gemäß dem Oberbegriff des Anspruchs 1.

Eine solche Kraftstoff-Fördereinrichtung ist durch die EP 0 991 863 B1 bekannt. Diese Kraftstof-Fördereinrichtung weist ein Gehäuse zur Aufnahme eines Fördermoduls und einer Antriebswelle zum Antrieb des Fördermoduls auf. Die Antriebswelle ist in einer Lagerbohrung des Gehäuses drehbar gelagert. Innerhalb der Lagerbohrung sind zwei axial zueinander beanstandete Dichtungsanordnungen zur Abdichtung eines kraftstoffführenden innenliegenden Bereichs gegenüber einem schmierstoffführenden äußeren Bereich angeordnet. Die gegenüber dem schmierstoffführenden Bereich wirksame Dichtungsanordnung ist auf einem Wellenabschnitt angeordnet, der einen zweiten Durchmesser besitzt, der kleiner ist als der erste Durchmesser eines Wellenabschnitts, auf dem die gegenüber dem kraftstoffführenden Bereich wirksame Dichtungsanordnung angeordnet ist. Der Übergang zwischen den beiden Durchmessern der Antriebswelle ist konisch verlaufend ausgebildet. Die Lagerbohrung ist im Durchmesser gestuft ausgebildet und weist im Bereich der gegenüber dem schmierstoffführenden Bereich wirksamen Dichtungsanordnung einen kleineren Durchmesser auf als im Bereich der gegenüber dem kraftstoffführenden Bereich. Dadurch ist die Bearbeitung der Lagerbohrung aufwendig, was zu hohen Herstellkosten der Kraftstoff-Fördereinrichtung führt.

Durch die EP 0 790 403 A1 ist eine Kraftstoff-Fördereinrichtung bekannt, bei der ebenfalls innerhalb einer Lagerbohrung des Gehäuses zwei axial zueinander beabstandete Dichtungsanordnungen zur Abdichtung eines kraftstoffführenden inneren Bereichs gegenüber einem schmierstoffführenden äußeren Bereich vorhanden sind. Die beiden Dichtungsanordnungen sind auf einem Abschnitt der Antriebswelle mit konstantem Durchmesser angeordnet und die Lagerbohrung ist im Durchmesser gestuft ausgebildet. Es ergeben sich somit dieselben Nachteile hinsichtlich aufwendiger Bearbeitung der Lagerbohrung und hoher Herstellkosten wie vorstehend angegeben.

Durch die DE 44 19 927 A1 ist eine Kraftstoff-Fördereinrichtung bekannt, bei der wiederum innerhalb einer Lagerbohrung des Gehäuses zwei axial zueinander beabstandete Dichtungsanordnungen zur Abdichtung eines kraftstoffführenden inneren Bereichs gegenüber einem schmierstoffführenden äußeren Bereich vorhanden sind. Die beiden Dichtungsanordnungen sind auf Abschnitten der Antriebswelle mit unterschiedlichen Durchmessern angeordnet und die Lagerbohrung ist im Durchmesser gestuft ausgebildet. Auch hier ergeben sich dieselben Nachteile hinsichtlich aufwendiger Bearbeitung der Lagerbohrung und hoher Herstellkosten wie vorstehend angegeben.

### Vorteile der Erfindung

Die erfindungsgemäße Kraftstoff-Fördereinrichtung mit den Merkmalen gemäß Anspruch 1 hat demgegenüber den Vorteil, dass die Lagerbohrung mit konstantem Durchmesser ausgeführt ist, wodurch die Herstellung vereinfacht ist und die Herstellkosten gering gehalten werden können. Ein Ausgleich der unterschiedlichen Durchmesser der Antriebswelle erfolgt durch die unterschiedlichen Innendurchmesser der Dichtungsanordnungen.

Gemäß einer bevorzugten Ausführungsform der Erfindung umfasst die erste und/oder die zweite Dichtungsanordnung einen Wellendichtring, der gehäuseseitig befestigt ist. Vorteilhafterweise besteht jede Dichtungsanordnung aus jeweils einem Wellendichtring. Die Ausbildung der Dichtungsanordnungen erfordert somit einen geringen Bauraum.

Bevorzugt besitzt der Wellendichtring eine Dichtlippe mit einer spitz zulaufenden Dichtkontur. Eine solche Dichtkontur liegt linienförmig entlang einer Kreislinie an der Antriebswelle an und bewirkt bei einer radialen Vorspannung des Wellendichtrings gegenüber der Antriebswelle eine verbesserte Dichtwirkung.

Weiterhin bevorzugt weist der Wellendichtring ein innenliegendes ringförmiges Spannelement zur radialen Vorspannung gegenüber der Antriebswelle auf. Das Spannelement ist demnach bevorzugt als Spannring ausgeführt, der in den Wellendichtring eingelegt ist und die Dichtlippe an die Antriebswelle presst.

Bevorzugte Ausführungsformen der Erfindung werden nachfolgend anhand der Zeichnung näher erläutert. Diese zeigt:

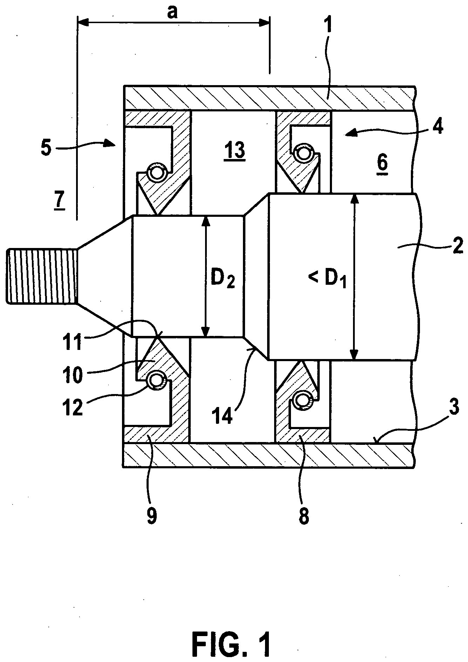

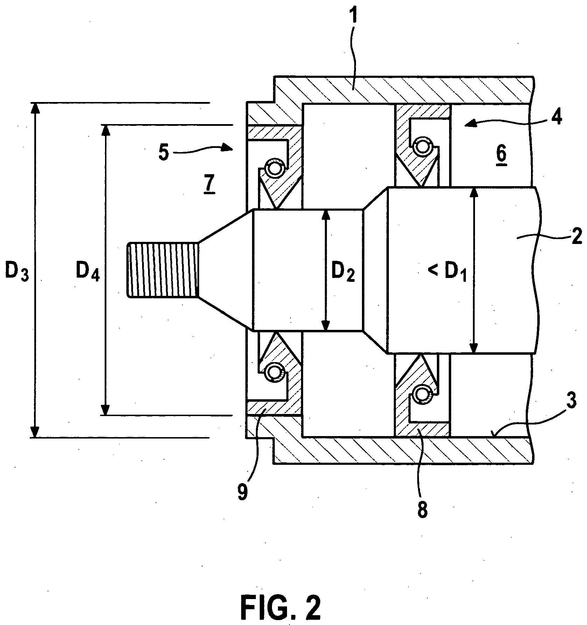

Fig. 1 einen schematischen Schnitt durch eine erste Ausführungsform einer erfindungsgemäßen Kraftstoff-Fördereinrichtung.

### Ausführliche Beschreibung der Zeichnung

Eine erfindungsgemäße Fördereinrichtung entsprechend der Figur 1 weist ein Gehäuse 1 mit einer Lagerbohrung 2 zur Aufnahme einer Antriebswelle 3 auf. Der Ringspalt 13 zwischen der Lagerbohrung 3 und der Antriebswelle 2 wird über zwei Dichtungsanordnungen 4, 5 gegenüber einem innenliegenden kraftstoffführenden Bereich 6 und einem außenliegenden schmierstoffführenden Bereich 7 abgedichtet. Vorliegend umfassen die Dichtungsanordnungen 4, 5 jeweils einen Wellendichtring 8, 9 mit jeweils einer keilförmig zulaufenden Dichtlippe 10, welche über ein ringförmiges Spannelement 11 gegen die Antriebswelle 2 radial vorgespannt ist.

Zum Schutz der Dichtlippe 10 des Wellendichtrings 8, welcher den Ringspalt 13 gegenüber dem innenliegenden kraftstoffführenden Bereich 6 abdichtet, weist die Antriebswelle 2 einen Wellenabschnitt a mit verringertem Außendurchmesser D₂ auf. Aufgrund des verringerten zweiten Außendurchmessers D₂ verkürzt sich für den Wellendichtring 8 der Verschiebeweg bei der Montage der Fördereinrichtung. Er muss lediglich auf den ersten Außendurchmesser D₁ aufgeschoben werden. Dadurch wird der Gefahr entgegen gewirkt, dass der Wellendichtring 8 umschlägt bzw. sich umstülpt und die Funktionsfähigkeit der Dichtungsanordnung 4 nicht mehr gegeben ist. Ferner verringert ein kurzer Verschiebeweg die Gefahr einer Beschädigung der Antriebswelle, beispielsweise durch mitgeführte Partikel, die zwischen der Dichtlippe 10 und der Antriebswelle 2 zu Kratzern bzw. Schleifspuren auf der Oberfläche der Antriebswelle 2 führen können.

Zur Ausbildung einer Einführschräge 14 ist der Übergang vom zweiten Außendurchmesser D₂ auf den ersten Außendurchmesser D₁ der Antriebswelle 2 konisch verlaufend ausgebildet. Die Einführschräge 14 bewirkt zugleich eine Zentrierung der Dichtungsanordnung 4 bzw. des Gehäuses 1 in Bezug auf die Längsachse der Antriebswelle 2 bei der Montage der Fördereinrichtung.

Um den Durchmesserversprung zu kompensieren ist bei der Ausführungsform der Fig. 1 der Wellendichtring 9 größer als der Wellendichtring 8 gewählt. Der Außendurchmesser der Wellendichtringe 8, 9 ist zwar gleich, aber der Innendurchmesser variiert. Somit ist auch eine dichtende Anlage des Wellendichtrings 9 am Wellenabschnitt a der Antriebswelle 2 gewährleistet.

## Patentansprüche

1. Kraftstoff-Fördereinrichtung für eine Brennkraftmaschine mit einem Gehäuse (1) zur Aufnahme wenigstens eines Fördermoduls und einer Antriebswelle (2) zum Antrieb des Fördermoduls, wobei die Antriebswelle (2) in einer Lagerbohrung (3) des Gehäuses (1) drehbar gelagert ist, wobei innerhalb der Lagerbohrung (3) wenigstens zwei axial zueinander beabstandete Dichtungsanordnungen (4, 5) zur Abdichtung eines kraftstoffführenden innenliegenden Bereichs (6) gegenüber einem schmierstoffführenden äußeren Bereich (7) angeordnet sein, wobei die gegenüber dem schmierstoffführenden Bereich (7) wirksame Dichtungsanordnung (5) auf einem Wellenabschnitt (a) angeordnet ist, der einen zweiten Durchmesser (D2) besitzt, der kleiner ist als der erste Duchmesser (D1) eines Wellenabschnitts, auf dem die gegenüber dem kraftstoffführenden Bereich (6) wirksame Dichtungsanordnung (4) angeordnet ist, wobei der Übergang zwischen den beiden Durchmessern (D1, D2) der Antriebswelle zumindest teilweise konisch verlaufend ausgebildet ist, **dadurch gekennzeichnet, dass** die Lagerbohrung (3) durchgehend einen konstanten Durchmesser aufweist, dass die beiden Dichtungsanordnungen (4, 5) den gleichen Außendurchmesser aufweisen und dass die gegenüber dem schmierstoffführenden Bereich (7) wirksame Dichtungsanordnung (5) einen kleineren Innendurchmesser aufweist als die gegenüber dem kraftstoffführenden Bereich (6) wirksame Dichtungsanordnung (4).

2. Kraftstoff-Fördereinrichtung nach Anspruch 1,
**dadurch gekennzeichnet, dass** die erste und/oder die zweite Dichtungsanordnung (4, 5) einen Wellendichtring (8, 9) umfasst, der gehäuseseitig befestigt ist.

3. Kraftstoff-Fördereinrichtung nach Anspruch 2,
**dadurch gekennzeichnet, dass** der Wellendichtring (8, 9) eine Dichtlippe (10) mit einer spitz zulaufenden Dichtkontur (11) besitzt.

4. Kraftstoff-Fördereinrichtung nach Anspruch 2 oder 3,
**dadurch gekennzeichnet, dass** der Wellendichtring (8, 9) ein innenliegendes ringförmiges Spannelement (12) zur radialen Vorspannung gegenüber der Antriebswelle (2) aufweist.

## Claims

1. Fuel delivery device for an internal combustion engine, having a housing (1) for accommodating at least one delivery module, and having a drive shaft (2) for driving the delivery module, wherein the drive shaft (2) is rotatably mounted in a bearing bore (3) of the housing (1), wherein, within the bearing bore (3), there are arranged at least two seal arrangements (4, 5) which are spaced apart from one another axially and which serve for sealing off a fuel-conducting internally situated region (6) with respect to a lubricant-conducting outer region (7), wherein the seal arrangement (5), which acts with respect to the lubricant-conducting region (7), is arranged on a shaft section (a) which has a second diameter (D2) which is smaller than the first diameter (D1) of a shaft section on which the seal arrangement (4) which acts with respect to the fuel-conducting region (6) is arranged, wherein the transition between the two diameters (D1, D2) of the drive shaft is at least partially of conically running form, **characterized in that** the bearing bore (3) has a constant diameter throughout, **in that** the two seal arrangements (4, 5) have the same outer diameter, and **in that** the seal arrangement (5) which acts with respect to the lubricant-conducting region (7) has a smaller inner diameter than the seal arrangement (4) which acts with respect to the fuel-conducting region (6).

2. Fuel delivery device according to Claim 1, **characterized in that** the first and/or the second seal arrangement (4, 5) comprises a shaft sealing ring (8, 9) which is fastened at the housing side.

3. Fuel delivery device according to Claim 2, **characterized in that** the shaft sealing ring (8, 9) has a sealing lip (10) with a sealing contour (11) which tapers to a point.

4. Fuel delivery device according to Claim 2 or 3, **characterized in that** the shaft sealing ring (8, 9) has an internally situated ring-shaped bracing element (12) for imparting a radial preload with respect to the drive shaft (2).

## Revendications

1. Dispositif de refoulement de carburant pour un moteur à combustion interne, comprenant un boîtier (1) destiné à recevoir au moins un module de refoulement et un arbre d'entraînement (2) pour l'entraînement du module de refoulement, l'arbre d'entraînement (2) étant supporté à rotation dans un alésage de palier (3) du boîtier (1), au moins deux agencements d'étanchéité (4, 5) espacés axialement l'un de l'autre pour l'étanchéité d'une région (6) située à l'intérieur conduisant le carburant par rapport à une région extérieure (7) conduisant du lubrifiant étant disposés à l'intérieur de l'alésage de palier (3), l'agencement d'étanchéité (5) agissant par rapport à la région (7) conduisant du lubrifiant étant disposé sur une portion d'arbre (a) qui possède un deuxième diamètre (D2) qui est inférieur au premier diamètre (D1) d'une portion d'arbre sur laquelle est disposé l'agencement d'étanchéité (4) agissant par rapport à la région conduisant le carburant (6), la transition entre les deux diamètres (D1, D2) de l'arbre d'entraînement étant réalisée de manière à s'étendre au moins en partie sous forme conique, **caractérisé en ce que** l'alésage de palier (3) présente sur toute sa longueur un diamètre constant, **en ce que** les deux agencements d'étanchéité (4, 5) présentent le même diamètre extérieur et **en ce que** l'agencement d'étanchéité (5) agissant par rapport à la région (7) conduisant du lubrifiant présente un plus petit diamètre intérieur que l'agencement d'étanchéité (4) agissant par rapport à la région (6) conduisant du carburant.

2. Dispositif de refoulement de carburant selon la revendication 1,
**caractérisé en ce que** le premier et/ou le deuxième agencement d'étanchéité (4, 5) comprennent une bague d'étanchéité d'arbre (8, 9) qui est fixée du côté du boîtier.

3. Dispositif de refoulement de carburant selon la revendication 2,
**caractérisé en ce que** la bague d'étanchéité d'arbre (8, 9) possède une lèvre d'étanchéité (10) avec un contour d'étanchéité (11) se terminant en pointe.

4. Dispositif de refoulement de carburant selon la revendication 2 ou 3,
**caractérisé en ce que** la bague d'étanchéité d'arbre (8, 9) présente un élément de serrage intérieur (12) de forme annulaire pour la précontrainte radiale par rapport à l'arbre d'entraînement (2).
